# EUROPÄISCHE PATENTSCHRIFT

(11) **EP 3 134 840 B1**
(45) Veröffentlichungstag und Bekanntmachung des Hinweises auf die Patenterteilung: **15.04.2020**
(21) Anmeldenummer: 15718842.6
(22) Anmeldetag: 20.04.2015
(51) Int. Cl.: G06F 21/33, H04L 9/32

(54) **VERFAHREN ZUM VERSEHEN EINES IDENTIFIKATIONSAUSWEISES EINER PERSON MIT EINEM KRYPTOGRAPHISCHEN ZERTIFIKAT**
METHOD FOR PROVIDING AN IDENTIFICATION CARD OF A PERSON WITH A CRYPTOGRAPHIC CERTIFICATE
PROCÉDÉ PERMETTANT DE MUNIR UNE CARTE D'IDENTITÉ D'UNE PERSONNE D'UN CERTIFICAT CRYPTOGRAPHIQUE

(30) Priorität: 25.04.2014 DE 102014105866
(43) Veröffentlichungstag der Anmeldung: 01.03.2017
(73) Patentinhaber: Bundesdruckerei GmbH, 10969 Berlin (DE)
(72) Erfinder: SCHWARZ, Carsten, 13465 Berlin (DE)
(74) Vertreter: Patentship Patentanwaltsgesellschaft mbH
(86) Internationale Anmeldenummer: PCT/EP2015/058503
(87) Internationale Veröffentlichungsnummer: WO 2015/162086

(56) Entgegenhaltungen:
- DE-A1-102008 029 636
- "Procedure to Install Gemalto Token and Certificate Generation", , 9. Februar 2014 (2014-02-09), XP055197722, Gefunden im Internet: URL:https://web.archive.org/web/2014020916 3723/http://nicca.nic.in/pdf/User Instructions-Gemalto-tokens.pdf [gefunden am 2015-06-23]
- Yobot: "Certificate signing request - Wikipedia, the free encyclopedia", , 15. März 2014 (2014-03-15), XP055197886, Gefunden im Internet: URL:https://en.wikipedia.org/w/index.php?t itle=Certificate_signing_request&oldid=599 700196 [gefunden am 2015-06-24]

## Beschreibung

Die Erfindung betrifft das Gebiet der Personalisierung eines Identifikationsausweises, beispielsweise eines Betriebsausweises, einer Person mit einem kryptographischen Zertifikat.

Die Druckschrift "Procedure to Install Gemalto Token and Certificate Generation" betrifft eine Anleitung zum Installieren eines Treibers für einen Gemalto-Token und für das Anfordern und Erzeugen von Zertifikaten.

Die Offenlegungsschrift DE 10 2008 029636 A1 offenbart ein Verfahren zum Freischalten eines von einem elektronischen Gerät bereitgestellten Dienstes.

Der Wikipedia-Artikel "Certificate signing request - Wikipedia, the Frachtevaluierungseinheit encyclopedia" offenbart, dass vor einem Erzeugen eines "Certificate signing request" der Antragsteller zunächst ein Schlüsselpaar erzeugt und hierbei den privaten Schlüssel des Schlüsselpaares behält. Der "Certificate signing request" enthält den öffentlichen Schlüssel des Schlüsselpaares und wird einer "Certificate Authority" übermittelt.

Identifikationsausweise werden für eine Vielzahl von Anwendungen zur Identifizierung von Personen eingesetzt. In Unternehmen werden Identifikationsausweise beispielsweise als Betriebsausweise zur Identifikation von Mitarbeitern verwendet.

Um einen Identifikationsausweis einer Person zuzuordnen, wird eine Personalisierung des Identifikationsausweises durchgeführt. Eine Personalisierung des Identifikationsausweises kann beispielsweise optisch durch Aufbringen eines Namens der Person auf dem Identifikationsausweis erfolgen. Eine Personalisierung des Identifikationsausweises kann ferner elektronisch durch Versehen des Identifikationsausweises mit einem kryptographischen Zertifikat der Person durchgeführt werden. Unter Verwendung des kryptographischen Zertifikats kann die Person beispielsweise eine kryptographische Datenverschlüsselung oder eine kryptographische Datensignierung durchführen.

In vielen Anwendungen wird zunächst eine optische Personalisierung des Identifikationsausweises durchgeführt und der Identifikationsausweis anschließend der Person ausgehändigt. Der Identifikationsausweis kann somit zur optischen Identifikation der Person verwendet werden. Ein nachträgliches Versehen des Identifikationsausweises mit einem kryptographischen Zertifikat ist häufig wünschenswert, um der Person nachträglich eine kryptographische Datenverschlüsselung oder eine kryptographische Datensignierung zu ermöglichen.

Das nachträgliche Versehen eines Identifikationsausweises mit einem kryptographischen Zertifikat ist jedoch üblicherweise mit hohem Aufwand verbunden, da eine aufwändige Identifizierung der Person, beispielsweise durch eine Registrierungsstelle oder eine Registration Authority (RA), durchgeführt werden muss. Darüber hinaus werden üblicherweise komplexe Personalisierungsgeräte und Softwarekomponenten zum Versehen des Identifikationsausweises mit dem kryptographischen Zertifikat benötigt.

Es ist daher die Aufgabe der vorliegenden Erfindung, ein effizientes Konzept zum Versehen eines Identifikationsausweises einer Person mit einem kryptographischen Zertifikat zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Figuren.

Die Erfindung basiert auf der Erkenntnis, dass die obige Aufgabe unter Verwendung eines vorgespeicherten Personendatums gelöst werden kann, welches von einer Datenverarbeitungsanlage an einen elektronischen Zertifizierungsserver übermittelt wird. Die Datenverarbeitungsanlage kann beispielsweise vorgesehen sein, Personendaten von Mitarbeitern eines Unternehmens zu verwalten. Der elektronische Zertifizierungsserver kann das kryptographische Zertifikat erzeugen und an den Identifikationsausweis übermitteln. Dadurch wird erreicht, dass auf eine Speicherung von Personendaten in dem Identifikationsausweis und auf eine aufwändige Identifizierung der Person verzichtet werden kann.

Zur Authentifizierung der Person kann der elektronische Zertifizierungsserver zudem ein kryptographisches Geheimnis, beispielsweise eine alphanummerische Zeichenfolge, erzeugen und an die Person übermitteln. Die Übermittlung des kryptographischen Geheimnisses kann beispielsweise elektronisch in Form einer Email oder postalisch in Form eines Briefes realisiert werden. Die Person kann sich daraufhin bei dem elektronischen Zertifizierungsserver unter Verwendung des kryptographischen Geheimnisses authentifizieren. Das kryptographische Geheimnis kann jedoch auch per Barcode oder telefonisch, beispielsweise über die Stimme, weitergegeben werden.

Die einzelnen Verfahrensschritte, wie beispielsweise die Personalisierung oder die Erzeugung des kryptographischen Zertifikats, können zu beliebigen Zeitpunkten durchgeführt werden. Insbesondere können die zeitlichen Abstände zwischen den Zeitpunkten der Ausführung der Verfahrensschritte beliebig sein. So kann beispielweise zwischen einer Herausgabe des Identifikationsausweises an die Person und einer Personalisierung oder dem Erzeugen des kryptographischen Zertifikats eine Nutzungsphase liegen. Darüber hinaus sind spätere Änderungen des Personendatums und/oder des kryptographischen Zertifikats möglich.

Gemäß einem ersten Aspekt betrifft die Erfindung ein Verfahren gemäß Anspruch 1. Dadurch wird der Vorteil erreicht, dass ein effizientes Konzept zum Versehen eines Identifikationsausweises einer Person mit einem kryptographischen Zertifikat realisiert werden kann.

Der Identifikationsausweis kann ein Betriebsausweis sein. Der Identifikationsausweis kann ferner eines der folgenden Identitätsdokumente sein: ein Personalausweis, ein Reisepass, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, ein Zahlungsmittel, eine Bankkarte, oder eine Kreditkarte.

Der Identifikationsausweis kann ferner eine Chipkarte sein, welche beispielsweise verkäuflich oder frei ist. So kann der Identifikationsausweis beispielsweise einer Zeitschrift beigefügt werden und mit dieser einem Nutzer beispielsweise kostenfrei übergeben werden. Der Nutzer kann zu einem späteren Zeitpunkt den Identifikationsausweis wie hierin beschrieben personalisieren oder unter Verwendung des Betriebsausweises ein Zertifikat beschaffen.

Der Identifikationsausweis kann ferner einen elektronisch auslesbaren Schaltkreis, beispielsweise einen RFID-Chip oder eine SIM-Karte, umfassen. Der Identifikationsausweis kann ein- oder mehrlagig bzw. papier- und/oder kunststoffbasiert sein. Der Identifikationsausweis kann aus kunststoffbasierten Folien aufgebaut sein, welche zu einem Kartenkörper mittels Verkleben und/oder Laminieren zusammengefügt sind, wobei die Folien bevorzugt ähnliche stoffliche Eigenschaften aufweisen.

Der Identifikationsausweis kann ferner mittels eines Smartphones, das eine SIM enthalten kann, realisiert werden.

Das kryptographische Zertifikat kann ein Public-Key-Zertifikat sein. Das kryptographische Zertifikat kann nach dem X.509 Standard formatiert sein. Der kryptographische Schlüssel kann ein öffentlicher kryptographischer Schlüssel sein. Der elektronische Zertifizierungsserver kann eine Zertifizierungsstelle, eine Certificate Authority (CA) oder ein Trustcenter sein.

Unter Verwendung des kryptographischen Zertifikats kann die Person beispielsweise eine kryptographische Datenverschlüsselung oder eine kryptographische Datensignierung oder eine Authentifikation oder eine Autentisierung durchführen.

Das vorgespeicherte Personendatum kann ein Name der Person, ein Geburtsdatum der Person, oder ein Geburtsort oder eine Anschrift der Person sein. Das vorgespeicherte Personendatum kann ferner ein Attribut der Person, beispielsweise eine Stellung der Person innerhalb eines Unternehmens, eine monetäre Beschränkung oder ein Einschränkung eines Geschäftszwecks sein. Die Datenverarbeitungsanlage kann ein Computer sein.

Die Vorspeicherung des Personendatums kann zu einem späteren Zeitpunkt, insbesondere nach der Übergabe bzw. Herstellung des Identifikationsausweises, beispielsweise nach einer oder mehreren Stunden, nach einem oder mehreren Tagen, nach einer oder mehreren Wochen oder nach einem oder mehreren Monaten, erfolgen.

Gemäß einer Ausführungsform ist das vorgespeicherte Personendatum in der Datenverarbeitungsanlage vorgespeichert. Dadurch wird der Vorteil erreicht, dass das Personendatum effizient bereitgestellt werden kann. Zudem kann auf ein Speichern des Personendatums in dem Identifikationsausweis verzichtet werden.

Die Datenverarbeitungsanlage kann ausgebildet sein, eine Mehrzahl von Personendaten, beispielsweise einer Mehrzahl von Mitarbeitern eines Unternehmens, zu speichern und/oder zu verwalten.

Erfindungsgemäß umfasst das Verfahren ein Erzeugen eines kryptographischen Geheimnisses durch den elektronischen Zertifizierungsserver, wobei das kryptographische Geheimnis dem Personendatum zugeordnet ist, ein Übermitteln des kryptographischen Geheimnisses von dem elektronischen Zertifizierungsserver an die Person, ein Authentifizieren der Person gegenüber dem elektronischen Zertifizierungsserver auf der Basis des übermittelten kryptographischen Geheimnisses, und ein Aufbauen einer Kommunikationsverbindung zwischen dem elektronischen Zertifizierungsserver und dem Identifikationsausweis ansprechend auf die Authentifizierung der Person. Dadurch wird der Vorteil erreicht, dass eine effiziente Authentifizierung der Person durchgeführt werden kann.

Das kryptographische Geheimnis kann unter Verwendung eines Zufallsgenerators erzeugt werden. Das kryptographische Geheimnis kann in dem elektronischen Zertifizierungsserver gespeichert werden.

Die Kommunikationsverbindung zwischen dem elektronischen Zertifizierungsserver und dem Identifikationsausweis kann über ein Lesegerät aufgebaut werden. Das Lesegerät kann ausgebildet sein, mit dem Identifikationsausweis zu kommunizieren.

Gemäß einer Ausführungsform umfasst das Verfahren ein Übermitteln einer vorgespeicherten Kommunikationsadresse der Person an den elektronischen Zertifizierungsserver durch die Datenverarbeitungsanlage, wobei das Übermitteln des kryptographischen Geheimnisses von dem elektronischen Zertifizierungsserver an die Person unter Verwendung der Kommunikationsadresse der Person durchgeführt wird. Dadurch wird der Vorteil erreicht, dass das kryptographische Geheimnis effizient an die Person übermittelt werden kann.

Die vorgespeicherte Kommunikationsadresse der Person kann eine Emailadresse der Person sein. Die vorgespeicherte Kommunikationsadresse der Person kann in der Datenverarbeitungsanlage vorgespeichert sein.

Das kryptographische Geheimnis kann durch den elektronischen Identifizierungsserver an die Kommunikationsadresse der Person ausgesendet werden, um das kryptographische Geheimnis an die Person zu übermitteln. Das kryptographische Geheimnis kann mittels einer Email an die Person übermittelt werden.

Gemäß einer Ausführungsform ist das kryptographische Geheimnis eine alphanummerische Zeichenfolge oder ein kryptographischer Geheimnisschlüssel. Dadurch wird der Vorteil erreicht, dass das kryptographische Geheimnis effizient an die Person übermittelt werden kann.

Die alphanummerische Zeichenfolge kann eine Folge von Ziffern und/oder Buchstaben umfassen. Der kryptographische Geheimnisschlüssel kann Teil eines kryptographischen Geheimnisschlüsselpaares sein.

Gemäß einer Ausführungsform umfasst das Verfahren ein Übermitteln einer vorgespeicherten Identifikationskennung des Identifikationsausweises an den elektronischen Zertifizierungsserver durch die Datenverarbeitungsanlage, und ein Authentifizieren des Identifikationsausweises gegenüber dem elektronischen Zertifizierungsserver auf der Basis der übermittelten Identifikationskennung des Identifikationsausweises. Dadurch wird der Vorteil erreicht, dass eine Authentizität des Identifikationsausweises verifiziert werden kann.

Die Identifikationskennung kann in dem Identifikationsausweis gespeichert sein. Das Authentifizieren des Identifikationsausweises gegenüber dem elektronischen Zertifizierungsserver kann mittels eines Vergleichens der Identifikationskennung, welche in dem Identifikationsausweis gespeichert ist, mit der Identifikationskennung, welche an den elektronischen Zertifizierungsserver übermittelt wurde, durch den elektronischen Zertifizierungsserver durchgeführt werden. Das Vergleichen kann unter Verwendung eines kryptographischen Challenge-Response-Verfahrens durchgeführt werden.

Gemäß einer Ausführungsform wird das Erzeugen des kryptographischen Zertifikats durch den elektronischen Zertifizierungsserver ferner auf der Basis der übermittelten Identifikationskennung des Identifikationsausweises durchgeführt. Dadurch wird der Vorteil erreicht, dass das kryptographische Zertifikat der Identifikationskennung des Identifikationsausweises zugeordnet werden kann.

Die Identifikationskennung des Identifikationsausweises kann in das kryptographische Zertifikat eingebettet werden, um das kryptographische Zertifikat der Identifikationskennung des Identifikationsausweises zuzuordnen.

Gemäß einer Ausführungsform ist die vorgespeicherte Identifikationskennung des Identifikationsausweises in der Datenverarbeitungsanlage vorgespeichert. Dadurch wird der Vorteil erreicht, dass die Identifikationskennung des Identifikationsausweises effizient bereitgestellt werden kann.

Die Datenverarbeitungsanlage kann ausgebildet sein, eine Mehrzahl von Identifikationskennungen einer Mehrzahl von Identifikationsausweisen zu speichern und/oder zu verwalten.

Gemäß einer Ausführungsform umfasst der Identifikationsausweis eine Herstellerkennung eines Herstellers des Identifikationsausweises, wobei das Verfahren ferner ein Authentifizieren des Identifikationsausweises gegenüber dem elektronischen Zertifizierungsserver auf der Basis der Herstellerkennung umfasst. Dadurch wird der Vorteil erreicht, dass eine Authentizität des Identifikationsausweises verifiziert werden kann.

Die Herstellerkennung kann in dem elektronischen Identifizierungsserver gespeichert sein. Die Herstellerkennung kann ferner in dem Identifikationsausweis gespeichert sein. Das Authentifizieren des Identifikationsausweises gegenüber dem elektronischen Zertifizierungsserver kann mittels eines Vergleichens der Herstellerkennung, welche in dem Identifikationsausweis gespeichert ist, mit der Herstellerkennung, welche in dem elektronischen Zertifizierungsserver gespeichert ist, durch den elektronischen Zertifizierungsserver durchgeführt werden. Das Vergleichen kann unter Verwendung eines kryptographischen Challenge-Response-Verfahrens durchgeführt werden.

Gemäß einer Ausführungsform umfasst das Erzeugen des kryptographischen Schlüssels durch den Identifikationsausweis ein Erzeugen eines weiteren kryptographischen Schlüssels durch den Identifikationsausweis, wobei der kryptographische Schlüssel und der weitere kryptographische Schlüssel ein kryptographisches Schlüsselpaar bilden. Dadurch wird der Vorteil erreicht, dass eine Datensignierung und/oder eine Datenverschlüsselung unter Verwendung einer Public-Key-Infrastruktur möglich werden.

Der kryptographische Schlüssel kann ein öffentlicher kryptographischer Schlüssel sein. Der weitere kryptographische Schlüssel kann ein privater kryptographischer Schlüssel sein. Der kryptographische Schlüssel und/oder der weitere kryptographische Schlüssel können in dem Identifikationsausweis gespeichert werden.

Gemäß einer Ausführungsform ist der Identifikationsausweis ein Betriebsausweis. Dadurch wird der Vorteil erreicht, dass eine effiziente elektronische Personalisierung eines Betriebsausweises realisiert werden kann.

Der Betriebsausweis kann ein Unternehmensausweis oder ein Hausausweis sein. Der Betriebsausweis kann zur Identifikation eines Mitarbeiters eines Unternehmens und/oder zur Zutrittskontrolle eines Mitarbeiters innerhalb eines Unternehmens eingesetzt werden.

Der Betriebsausweis kann ferner ein optisches Merkmal aufweisen, welches einer Person oder einem Mitarbeiter des Unternehmens zugeordnet ist. Die Person oder der Mitarbeiter des Unternehmens können unter Verwendung des optischen Merkmals optisch identifiziert werden.

Gemäß einem zweiten Aspekt betrifft die Erfindung einen elektronischen Zertifizierungsserver zum Versehen eines Identifikationsausweises einer Person mit einem kryptographischen Zertifikat gemäß Anspruch 10. Dadurch wird der Vorteil erreicht, dass ein effizientes Konzept zum Versehen eines Identifikationsausweises einer Person mit einem kryptographischen Zertifikat realisiert werden kann.

Die Kommunikationsschnittstelle kann drahtgebunden oder drahtlos über das Kommunikationsnetzwerk kommunizieren. Das Kommunikationsnetzwerk kann das Internet sein. Der Prozessor kann ausgebildet sein, ein Computerprogramm auszuführen.

Die Kommunikationsschnittstelle kann das vorgespeicherte Personendatum von einer Datenverarbeitungsanlage über das Kommunikationsnetzwerk empfangen.

Das Verfahren zum Versehen eines Identifikationsausweises einer Person mit einem kryptographischen Zertifikat kann mittels des elektronischen Zertifizierungsservers durchgeführt werden. Weitere Merkmale des elektronischen Zertifizierungsservers ergeben sich unmittelbar aus der Funktionalität des Verfahrens zum Versehen eines Identifikationsausweises einer Person mit einem kryptographischen Zertifikat.

Erfindungsgemäß ist der Prozessor ferner ausgebildet, ein kryptographisches Geheimnis zu erzeugen, wobei das kryptographische Geheimnis dem Personendatum zugeordnet ist, und wobei die Kommunikationsschnittstelle ferner ausgebildet ist, das kryptographische Geheimnis an die Person über das Kommunikationsnetzwerk zu übermitteln, die Person auf der Basis des übermittelten kryptographischen Geheimnisses über das Kommunikationsnetzwerk zu authentifizieren, und eine Kommunikationsverbindung zu dem Identifikationsausweis über das Kommunikationsnetzwerk ansprechend auf die Authentifizierung der Person aufzubauen. Dadurch wird der Vorteil erreicht, dass eine effiziente Authentifizierung der Person durchgeführt werden kann.

Gemäß einer Ausführungsform ist die Kommunikationsschnittstelle ferner ausgebildet, eine vorgespeicherte Identifikationskennung des Identifikationsausweises über das Kommunikationsnetzwerk zu empfangen, und den Identifikationsausweis auf der Basis der übermittelten Identifikationskennung des Identifikationsausweises über das Kommunikationsnetzwerk zu authentifizieren. Dadurch wird der Vorteil erreicht, dass eine Authentizität des Identifikationsausweises verifiziert werden kann.

Die Kommunikationsschnittstelle kann die vorgespeicherte Identifikationskennung des Identifikationsausweises von einer Datenverarbeitungsanlage über das Kommunikationsnetzwerk empfangen.

Gemäß einem dritten Aspekt betrifft die Erfindung einen Betriebsausweis gemäß Anspruch 12. Dadurch wird der Vorteil erreicht, dass ein effizientes Konzept zum Versehen eines Betriebsausweises einer Person mit einem kryptographischen Zertifikat realisiert werden kann.

Der Betriebsausweis kann ein Unternehmensausweis oder ein Hausausweis sein. Der Betriebsausweis kann zur Identifikation eines Mitarbeiters eines Unternehmens und/oder zur Zutrittskontrolle eines Mitarbeiters innerhalb eines Unternehmens eingesetzt werden.

Unter dem Begriff "Unternehmen" sind neben Unternehmen und Firmen auch Vereine, öffentliche Einrichtungen wie beispielsweise Bildungseinrichtungen etc. zu verstehen.

Der Prozessor kann ausgebildet sein, ein Computerprogramm auszuführen. Die Kommunikationsschnittstelle kann über ein Lesegerät mit dem elektronischen Zertifizierungsserver über das Kommunikationsnetzwerk kommunizieren. Der Speicher kann ein Hardware-Sicherheitsmodul bzw. Hardware Security Module (HSM) sein.

Das Verfahren zum Versehen eines Identifikationsausweises einer Person mit einem kryptographischen Zertifikat kann mittels des Betriebsausweises als Identifikationsausweis durchgeführt werden. Weitere Merkmale des Betriebsausweises als Identifikationsausweis ergeben sich unmittelbar aus der Funktionalität des Verfahrens zum Versehen eines Identifikationsausweises einer Person mit einem kryptographischen Zertifikat.

Erfindungsgemäß weist der Betriebsausweis ein optisches Merkmal auf, wobei das optische Merkmal einer Person zugeordnet ist. Dadurch wird der Vorteil erreicht, dass der Betriebsausweis zur optischen Identifikation der Person eingesetzt werden kann.

Das optische Merkmal kann ein Gesichtsbild der Person sein. Das optische Merkmal kann auf den Betriebsausweis aufgedruckt oder in den Betriebsausweis eingraviert sein.

Gemäß einem vierten Aspekt betrifft die Erfindung ein Computerprogramm mit einem Programmcode zum Ausführen des Verfahrens zum Versehen eines Identifikationsausweises einer Person mit einem kryptographischen Zertifikat, wenn der Programmcode auf einem Computer ausgeführt wird. Dadurch wird der Vorteil erreicht, dass das Verfahren automatisiert und wiederholbar ausgeführt werden kann.

Das Computerprogramm kann durch den Prozessor des elektronischen Zertifizierungsservers und/oder den Prozessor des Betriebsausweises ausgeführt werden. Der Programmcode kann in maschinen-lesbarer Form vorliegen.

Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein Diagramm eines Verfahrens zum Versehen eines Identifikationsausweises einer Person mit einem kryptographischen Zertifikat gemäß einer Ausführungsform;
- Fig. 2: ein Diagramm eines elektronischen Zertifizierungsservers zum Versehen eines Identifikationsausweises einer Person mit einem kryptographischen Zertifikat gemäß einer Ausführungsform;
- Fig. 3: ein Diagramm eines Identifikationsausweises gemäß einer Ausführungsform;
- Fig. 4: ein Diagramm eines Systems zum Versehen eines Identifikationsausweises einer Person mit einem kryptographischen Zertifikat gemäß einer Ausführungsform; und
- Fig. 5: ein Diagramm eines Systems zum Versehen eines Identifikationsausweises einer Person mit einem kryptographischen Zertifikat gemäß einer Ausführungsform.

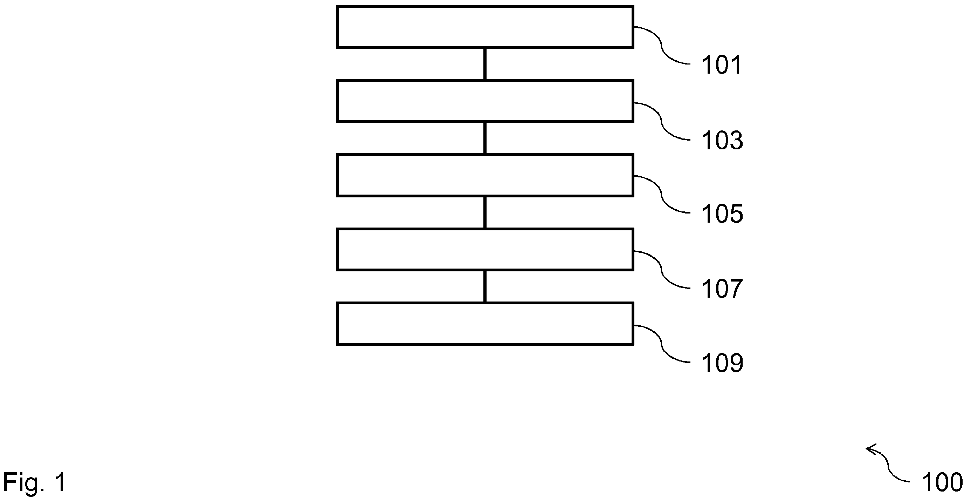

Fig. 1 zeigt ein Diagramm eines Verfahrens 100 zum Versehen eines Identifikationsausweises einer Person mit einem kryptographischen Zertifikat gemäß einer Ausführungsform.

Das Verfahren 100 umfasst ein Übermitteln 101 eines vorgespeicherten Personendatums an einen elektronischen Zertifizierungsserver durch eine Datenverarbeitungsanlage, ein Erzeugen 103 eines kryptographischen Schlüssels durch den Identifikationsausweis, ein Übermitteln 105 des erzeugten kryptographischen Schlüssels von dem Identifikationsausweis an den elektronischen Zertifizierungsserver, ein Erzeugen 107 des kryptographischen Zertifikats durch den elektronischen Zertifizierungsserver auf der Basis des kryptographischen Schlüssels und des Personendatums, und ein Übermitteln 109 des kryptographischen Zertifikats durch den elektronischen Zertifizierungsserver an den Identifikationsausweis, um den Identifikationsausweis mit dem kryptographischen Zertifikat zu versehen.

Die Verfahrensschritte können zu beliebigen Zeitpunkten durchgeführt werden. Insbesondere können die zeitlichen Abstände zwischen den Zeitpunkten der Ausführung der Verfahrensschritte beliebig sein. So kann beispielweise zwischen einer Herausgabe des Identifikationsausweises an die Person und einem Nachladen bzw. Erzeugen des kryptographischen Zertifikats eine beliebige Nutzungsphase liegen. Darüber hinaus sind spätere Änderungen des Personendatums und/oder des kryptographischen Zertifikats möglich.

Der Identifikationsausweis kann ein Betriebsausweis sein. Der Identifikationsausweis kann ferner eines der folgenden Identitätsdokumente sein: ein Personalausweis, ein Reisepass, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, ein Zahlungsmittel, eine Bankkarte, oder eine Kreditkarte.

Der Identifikationsausweis kann ferner einen elektronisch auslesbaren Schaltkreis, beispielsweise einen RFID-Chip, umfassen. Der Identifikationsausweis kann ein- oder mehrlagig bzw. papier- und/oder kunststoffbasiert sein. Der Identifikationsausweis kann aus kunststoffbasierten Folien aufgebaut sein, welche zu einem Kartenkörper mittels Verkleben und/oder Laminieren zusammengefügt sind, wobei die Folien bevorzugt ähnliche stoffliche Eigenschaften aufweisen.

Das kryptographische Zertifikat kann ein Public-Key-Zertifikat sein. Das kryptographische Zertifikat kann nach dem X.509 Standard formatiert sein. Der kryptographische Schlüssel kann ein öffentlicher kryptographischer Schlüssel sein. Der elektronische Zertifizierungsserver kann eine Zertifizierungsstelle, eine Certificate Authority (CA) oder ein Trustcenter sein.

Das vorgespeicherte Personendatum kann ein Name der Person, ein Geburtsdatum der Person, oder eine Anschrift der Person sein. Das vorgespeicherte Personendatum kann ferner ein Attribut der Person, beispielsweise eine Stellung der Person innerhalb eines Unternehmens, sein. Die Datenverarbeitungsanlage kann ein Computer sein.

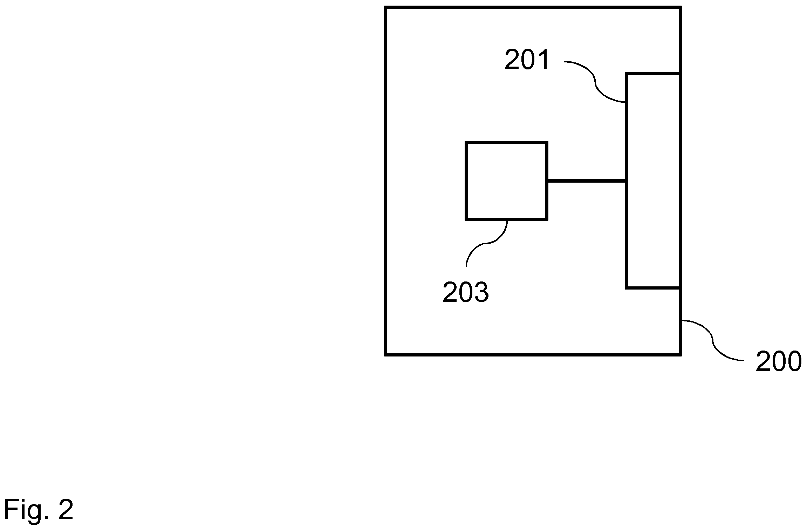

Fig. 2 zeigt ein Diagramm eines elektronischen Zertifizierungsservers 200 zum Versehen eines Identifikationsausweises einer Person mit einem kryptographischen Zertifikat gemäß einer Ausführungsform.

Der elektronische Zertifizierungsserver 200 umfasst eine Kommunikationsschnittstelle 201, welche ausgebildet ist, ein vorgespeichertes Personendatum über ein Kommunikationsnetzwerk zu empfangen, einen kryptographischen Schlüssel von dem Identifikationsausweis über das Kommunikationsnetzwerk zu empfangen, und das kryptographische Zertifikat an den Identifikationsausweis über das Kommunikationsnetzwerk zu übermitteln, um den Identifikationsausweis mit dem kryptographischen Zertifikat zu versehen, und einen Prozessor 203, welcher ausgebildet ist, das kryptographische Zertifikat auf der Basis des kryptographischen Schlüssels und des Personendatums zu erzeugen.

Der elektronische Zertifizierungsserver 200 kann eine Zertifizierungsstelle, eine Certificate Authority (CA) oder ein Trustcenter sein. Die Kommunikationsschnittstelle 201 kann drahtgebunden oder drahtlos über das Kommunikationsnetzwerk kommunizieren. Das Kommunikationsnetzwerk kann das Internet sein. Der Prozessor 203 kann ausgebildet sein, ein Computerprogramm auszuführen.

Die Kommunikationsschnittstelle 201 kann das vorgespeicherte Personendatum von einer Datenverarbeitungsanlage über das Kommunikationsnetzwerk empfangen. Die Kommunikationsschnittstelle 201 ist mit dem Prozessor 203 verbunden.

Die Kommunikationsschnittstelle 201 kann eigerichtet sein, eine Kommunikation mit und/oder zu und/oder von dem Prozessor 203, welcher als ein Chip ausgeführt sein kann, für den kryptographischen Schlüssel bzw. für dessen Übertragung, zu ermöglichen. Darüber hinaus kann die Kommunikationsschnittstelle 201 kann eigerichtet sein, eine Kommunikation zu einem Unternehmen bzw. zu einer Firma, beispielsweise für die Übernahme von Personendaten, zu ermöglichen.

Das Verfahren 100 zum Versehen eines Identifikationsausweises einer Person mit einem kryptographischen Zertifikat in Fig. 1 kann mittels des elektronischen Zertifizierungsservers 200 durchgeführt werden. Weitere Merkmale des elektronischen Zertifizierungsservers 200 ergeben sich unmittelbar aus der Funktionalität des Verfahrens 100 zum Versehen eines Identifikationsausweises einer Person mit einem kryptographischen Zertifikat in Fig. 1.

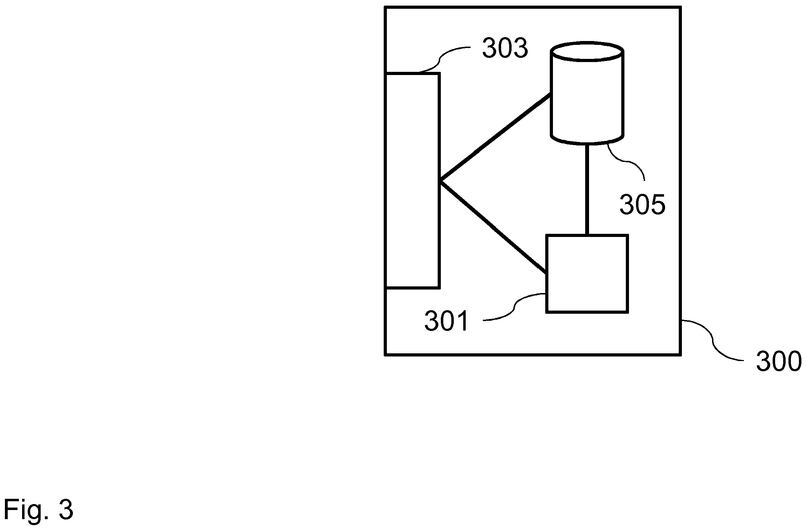

Fig. 3 zeigt ein Diagramm eines Identifikationsausweises 300 gemäß einer Ausführungsform.

Der Identifikationsausweis 300 umfasst einen Prozessor 301, welcher ausgebildet ist, einen kryptographischen Schlüssel zu erzeugen, eine Kommunikationsschnittstelle 303, welche ausgebildet ist, den erzeugten kryptographischen Schlüssel an einen elektronischen Zertifizierungsserver über ein Kommunikationsnetzwerk zu übermitteln, und ein kryptographisches Zertifikat von dem elektronischen Zertifizierungsserver über das Kommunikationsnetzwerk zu empfangen, und einen Speicher 305, welcher ausgebildet ist, das kryptographische Zertifikat zu speichern.

Der Identifikationsausweis 300 kann ein Betriebsausweis sein. Der Betriebsausweis kann ein Unternehmensausweis oder ein Hausausweis sein. Der Betriebsausweis kann zur Identifikation eines Mitarbeiters eines Unternehmens und/oder zur Zutrittskontrolle eines Mitarbeiters innerhalb eines Unternehmens eingesetzt werden.

Der Identifikationsausweis 300 kann ferner eines der folgenden Identitätsdokumente sein: ein Personalausweis, ein Reisepass, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, ein Zahlungsmittel, eine Bankkarte, oder eine Kreditkarte.

Der Identifikationsausweis 300 kann ferner einen elektronisch auslesbaren Schaltkreis, beispielsweise einen RFID-Chip, umfassen. Der Identifikationsausweis 300 kann ein- oder mehrlagig bzw. papier- und/oder kunststoffbasiert sein. Der Identifikationsausweis 300 kann aus kunststoffbasierten Folien aufgebaut sein, welche zu einem Kartenkörper mittels Verkleben und/oder Laminieren zusammengefügt sind, wobei die Folien bevorzugt ähnliche stoffliche Eigenschaften aufweisen.

Der Prozessor 301 kann ausgebildet sein, ein Computerprogramm auszuführen. Die Kommunikationsschnittstelle 303 kann über ein Lesegerät mit dem elektronischen Zertifizierungsserver über das Kommunikationsnetzwerk kommunizieren. Der Speicher 305 kann ein Hardware-Sicherheitsmodul bzw. Hardware Security Module (HSM) sein.

Der Prozessor 301 ist mit der Kommunikationsschnittstelle 303 und dem Speicher 305 verbunden. Die Kommunikationsschnittstelle 303 ist mit dem Prozessor 301 und dem Speicher 305 verbunden. Der Speicher 305 ist mit dem Prozessor 301 und der Kommunikationsschnittstelle 303 verbunden.

Das Verfahren 100 zum Versehen eines Identifikationsausweises einer Person mit einem kryptographischen Zertifikat in Fig. 1 kann mittels des Identifikationsausweises 300 durchgeführt werden. Weitere Merkmale des Identifikationsausweises 300 ergeben sich unmittelbar aus der Funktionalität des Verfahrens 100 zum Versehen eines Identifikationsausweises einer Person mit einem kryptographischen Zertifikat in Fig. 1.

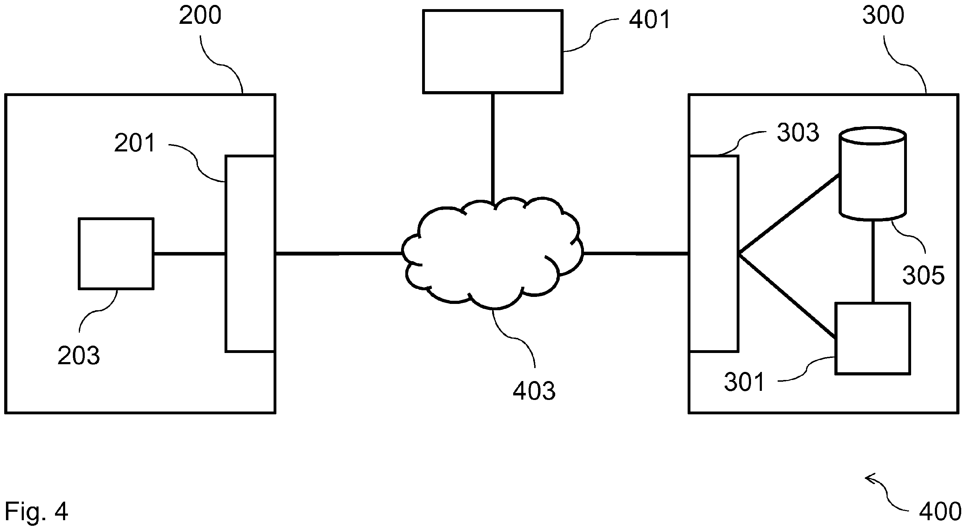

Fig. 4 zeigt ein Diagramm eines Systems 400 zum Versehen eines Identifikationsausweises 300 einer Person mit einem kryptographischen Zertifikat gemäß einer Ausführungsform.

Das System 400 umfasst den Identifikationsausweis 300 mit einem Prozessor 301, einer Kommunikationsschnittstelle 303 und einem Speicher 305, sowie einen elektronischen Zertifizierungsserver 200 mit einer Kommunikationsschnittstelle 201 und einem Prozessor 203. Das System 400 umfasst ferner eine Datenverarbeitungsanlage 401 und ein Kommunikationsnetzwerk 403. Die Datenverarbeitungsanlage 401 kann ein Computer sein. Das Kommunikationsnetzwerk 403 kann das Internet sein.

Die Kommunikationsschnittstelle 201 des elektronischen Zertifizierungsservers 200, die Kommunikationsschnittstelle 303 des Identifikationsausweises 300, und die Datenverarbeitungsanlage 401 sind über das Kommunikationsnetzwerk 403 miteinander verbunden.

Das Verfahren zum Versehen des Identifikationsausweises 300 einer Person mit einem kryptographischen Zertifikat kann beispielsweise folgendermaßen durchgeführt werden.

Ein vorgespeichertes Personendatum der Person kann durch die Datenverarbeitungsanlage 401 über das Kommunikationsnetzwerk 403 an den elektronischen Zertifizierungsserver 200 übermittelt werden. Das vorgespeicherte Personendatum kann dabei in der Datenverarbeitungsanlage 401 vorgespeichert sein.

Der elektronische Zertifizierungsserver 200 kann daraufhin ein kryptographisches Geheimnis erzeugen, welches dem Personendatum zugeordnet ist. Das kryptographische Geheimnis kann anschließend von dem elektronischen Zertifizierungsserver 200 an die Person übermittelt werden. Die Übermittlung des kryptographischen Geheimnisses an die Person kann beispielsweise elektronisch in Form einer Email an die Person über das Kommunikationsnetzwerk 403 realisiert werden.

Die Person kann sich gegenüber dem elektronischen Zertifizierungsserver 200 auf der Basis des übermittelten kryptographischen Geheimnisses authentifizieren. Ansprechend auf die Authentifizierung der Person kann eine Kommunikationsverbindung zwischen dem elektronischen Zertifizierungsserver 200 und dem Identifikationsausweis 300 der Person aufgebaut werden.

Ferner kann eine vorgespeicherte Identifikationskennung des Identifikationsausweises 300 durch die Datenverarbeitungsanlage 401 an den elektronischen Zertifizierungsserver über das Kommunikationsnetzwerk 403 übermittelt werden. Die Übermittlung der vorgespeicherten Identifikationskennung kann gemeinsam mit der Übermittlung des vorgespeicherten Personendatums durchgeführt werden. Die vorgespeicherte Identifikationskennung des Identifikationsausweises 300 kann dabei in der Datenverarbeitungsanlage vorgespeichert sein. Der Identifikationsausweis 300 kann somit gegenüber dem elektronischen Zertifizierungsserver 200 auf der Basis der übermittelten Identifikationskennung des Identifikationsausweises 300 authentifiziert werden.

Der Identifikationsausweis 300 kann anschließend einen kryptographischen Schlüssel erzeugen und den erzeugten kryptographischen Schlüssel an den elektronischen Zertifizierungsserver 200 über das Kommunikationsnetzwerk 403 übermitteln.

Der elektronische Zertifizierungsserver 200 kann daraufhin das kryptographische Zertifikat auf der Basis des übermittelten kryptographischen Schlüssels und des übermittelten Personendatums erzeugen und das erzeugte kryptographische Zertifikat an den Identifikationsausweis 300 über das Kommunikationsnetzwerk 403 übermitteln. Somit kann der Identifikationsausweis 300 mit dem kryptographischen Zertifikat versehen werden.

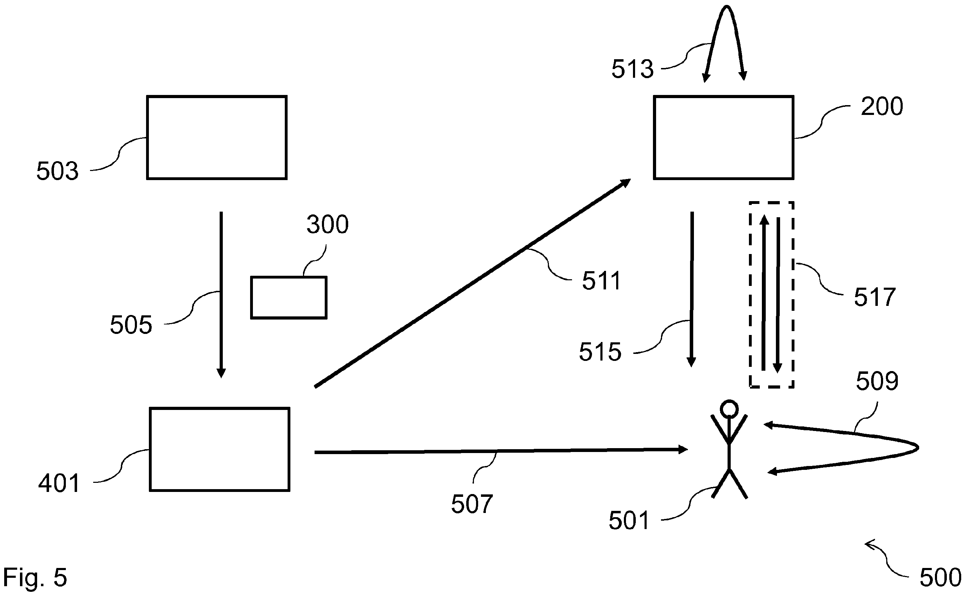

Fig. 5 zeigt ein Diagramm eines Systems 500 zum Versehen eines Identifikationsausweises 300 einer Person 501 mit einem kryptographischen Zertifikat gemäß einer Ausführungsform.

Das System 500 umfasst einen elektronischen Zertifizierungsserver 200, den Identifikationsausweis 300, eine Datenverarbeitungsanlage 401, die Person 501, einen Hersteller 503 des Identifikationsausweises 300, sowie Schritte 505, 507, 509, 511, 513, 515, 517.

Der elektronischen Zertifizierungsserver 200 kann ein Trustcenter sein. Der Identifikationsausweis 300 kann eine Chipkarte mit einer Identifikationskennung oder ID sein. Der Identifikationsausweis 300 kann zunächst unpersonalisiert sein. Die Datenverarbeitungsanlage 401 kann einem Unternehmen oder einer Firma zugeordnet sein. Die Person 501 kann ein Mitarbeiter des Unternehmens oder der Firma sein. Der Person 501 kann ein Personendatum, beispielsweise ein Name, ein Geburtsdatum oder ein Geburtsort, zugeordnet sein. Der Hersteller 503 des Identifikationsausweises 300 kann ein Kartenhersteller sein.

In Schritt 505 kann der Identifikationsausweis 300 ausgeliefert werden. In Schritt 507 kann der Identifikationsausweis 300 mit einem optischen Merkmal der Person 501 versehen werden oder der Identifikationsausweis 300 optisch personalisiert werden. In Schritt 509 kann der Identifikationsausweis 300 zur optischen Kontrolle oder Identifikation der Person 501 verwendet werden.

In Schritt 511 kann ein kryptographisches Zertifikat für den Identifikationsausweis 300 unter Verwendung eines Personendatums sowie einer Identifikationskennung des Identifikationsausweises 300 reserviert werden. In Schritt 513 kann das kryptographische Zertifikat unter Verwendung des Personendatums sowie der Identifikationskennung des Identifikationsausweises 300 reserviert werden. Zudem kann ein kryptographisches Geheimnis (SEC) erzeugt werden. In Schritt 515 kann das kryptographische Geheimnis (SEC) an die Person 501 übermittelt werden. In Schritt 517 kann das kryptographische Zertifikat für die Person 501 in den Identifikationsausweis 300 mit der Identifikationskennung geladen werden.

Bei einer Mehrzahl von Anwendungsszenarien gibt es eine Trennung zwischen der Personalisierung und der Nutzung von Identifikationsausweisen oder Betriebsausweisen.

Die Ansätze zur Personalisierung, insbesondere zur elektronischen Personalisierung, sind üblicherweise sehr aufwändig. Systeme zum Personalisieren oder Nach-Personalisieren basieren zumeist auf einer Identitätsinformation oder einem Geheimnis auf den Identifikationsausweisen oder Karten unter Verwendung eines Card Application Management Systems (CAMS). Dies macht die Identifikationsausweise und damit auch die Personalisierung sehr komplex.

Unternehmen sollen einfache, optisch kontrollierbare Identifikationsausweise oder Betriebsausweise und eine einfache Lösung erhalten, um zu einem späteren Zeitpunkt Zertifikate zur Signatur, Authentifizierung und Verschlüsselung nachzuladen.

Ein Hersteller 503 des Identifikationsausweises 300 kann den Identifikationsausweis 300 über einen einfachen Vertriebskanal anbieten. Zudem kann der Hersteller 503 des Identifikationsausweises 300 eine einfache Lösung für eine optische Personalisierung, beispielsweise eine Laser-Personalisierung, anbieten. Dabei kann eine Software zur Personalisierung verwendet werden. Die Software kann zudem kryptographische Zertifikate reservieren.

Der Identifikationsausweis 300 kann mit einer Zertifikatsanwendung, beispielsweise zur Signatur, Authentifizierung und Verschlüsselung, versehen sein. Der Identifikationsausweis 300 kann eine individuelle, eindeutige Identifikationskennung oder ID umfassen. Beispielsweise kann eine Mehrzahl von Identifikationsausweisen fortlaufend nummeriert sein. Der Identifikationsausweis 300 kann zudem eine dem Hersteller 503 des Identifikationsausweises 300 bekannte und für eine Mehrzahl von Identifikationsausweisen identische Herstellerkennung oder ein Herstellergeheimnis umfassen.

Ein Mitarbeiter eines Unternehmens, beispielsweise einer Personalabteilung, kann den Identifikationsausweis 300 oder Betriebsausweis optisch für eine Person 501 personalisieren. Dabei können Applets oder Programme für weitere Anwendung auf den Identifikationsausweis 300 oder Betriebsausweis geladen werden. Dies kann mittels eines Personalisierungsgerätes und der Software durchgeführt werden. Die Person 501 kann den Identifikationsausweis 300 als optisch kontrollierbaren Identifikationsausweis 300 oder Betriebsausweis nutzen.

Zu einem späteren Zeitpunkt soll die Person 501 eine digital Signierung oder eine digitale Authentifizierung mittels des Identifikationsausweises 300 oder Betriebsausweises durchführen können. Dazu kann ein Mitarbeiter des Unternehmens, beispielsweise der Personalabteilung, die Software verwenden. Die Identifikationskennung des Identifikationsausweises 300 und ein Personendatum oder persönliche Daten der Person 501 können dabei an einen elektronischen Zertifizierungsserver 200 oder ein Trustcenter gesendet werden. Dies kann unter Verwendung der Datenverarbeitungsanlage 401 erfolgen.

Der elektronische Zertifizierungsserver 200 kann ein kryptographisches Zertifikat für den Identifikationsausweis 300 mit der Identifikationskennung und dem Personendatum der Person 501 erzeugen. Zudem kann ein kryptographisches Geheimnis SEC erzeugt und an das Unternehmen oder direkt an die Person 501 übermittelt werden. Die Übermittlung kann mittels eines Briefes mit einem aufgedruckten kryptographischen Geheimnis oder Code, beispielsweise in Form von zehn alphanummerischen Zeichen, durchgeführt werden. Zudem kann die Übermittlung elektronisch mittels einer Email durchgeführt werden, welche einen Link auf ein Zertifikatsnachladesystem des elektronischen Zertifizierungsservers 200 umfassen kann. Das kryptographische Geheimnis kann dabei als URL-Parameter beigefügt sein. Die Person 501 kann das kryptographische Geheimnis unmittelbar von dem elektronischen Zertifizierungsserver 200 oder Trustcenter oder von dem Unternehmen erhalten.

Die Person 501 kann nun beispielsweise eine Webseite des elektronischen Zertifizierungsservers 200 öffnen. Der elektronische Zertifizierungsserver 200 kann verifizieren, dass der Brief oder die Email von ihm übermittelt oder herausgegeben wurde, beispielsweise mittels eines Challenge-Response-Verfahrens, und kann die Identifikationskennung des Identifikationsausweises 300 prüfen.

Dann kann der elektronische Zertifizierungsserver 200 oder der Identifikationsausweis 300 einen oder mehrere kryptographische Schlüssel erzeugen. Der elektronische Zertifizierungsserver 200 kann das kryptographische Zertifikat erzeugen und den Identifikationsausweis 300 oder Betriebsausweis mit dem kryptographischen Zertifikat versehen.

Dadurch kann erreicht werden, dass eine einfache elektronische Nachpersonalisierung des Identifikationsausweises 300 oder Betriebsausweises realisiert werden kann. Der Identifikationsausweis 300 oder Betriebsausweis kann standardisiert aufgebaut sein.

### BEZUGSZEICHENLISTE

- 100: Verfahren zum Versehen eines Identifikationsausweises einer Person mit einem kryptographischen Zertifikat
- 101: Übermitteln eines vorgespeicherten Personendatums
- 103: Erzeugen eines kryptographischen Schlüssels
- 105: Übermitteln des erzeugten kryptographischen Schlüssels
- 107: Erzeugen des kryptographischen Zertifikats
- 109: Übermitteln des kryptographischen Zertifikats

- 200: Elektronischer Zertifizierungsserver
- 201: Kommunikationsschnittstelle
- 203: Prozessor

- 300: Identifikationsausweis
- 301: Prozessor
- 303: Kommunikationsschnittstelle
- 305: Speicher

- 400: System
- 401: Datenverarbeitungsanlage
- 403: Kommunikationsnetzwerk

- 500: System
- 501: Person
- 503: Hersteller
- 505: Schritt
- 507: Schritt
- 509: Schritt
- 511: Schritt
- 513: Schritt
- 515: Schritt
- 517: Schritt

## Patentansprüche

1. Verfahren (100) zum Versehen eines mit einem optischen Merkmal einer Person (501) versehenen Identifikationsausweises (300) der Person (501) mit einem kryptographischen Zertifikat, mit:
Übermitteln (101) eines vorgespeicherten Personendatums an einen elektronischen Zertifizierungsserver (200) durch eine Datenverarbeitungsanlage (401);
Erzeugen (103) eines kryptographischen Schlüssels durch den Identifikationsausweis (300);
Übermitteln (105) des erzeugten kryptographischen Schlüssels von dem Identifikationsausweis (300) an den elektronischen Zertifizierungsserver (200);
Erzeugen (107) des kryptographischen Zertifikats durch den elektronischen Zertifizierungsserver (200) auf der Basis des kryptographischen Schlüssels und des Personendatums; und
Übermitteln (109) des kryptographischen Zertifikats durch den elektronischen Zertifizierungsserver (200) an den Identifikationsausweis (300), um den Identifikationsausweis (300) mit dem kryptographischen Zertifikat zu versehen,
Erzeugen eines kryptographischen Geheimnisses durch den elektronischen Zertifizierungsserver (200), wobei das kryptographische Geheimnis dem Personendatum zugeordnet ist;
Übermitteln des kryptographischen Geheimnisses von dem elektronischen Zertifizierungsserver (200) an die Person (501);
Authentifizieren der Person (501) gegenüber dem elektronischen Zertifizierungsserver (200) auf der Basis des übermittelten kryptographischen Geheimnisses; und
Aufbauen einer Kommunikationsverbindung zwischen dem elektronischen Zertifizierungsserver (200) und dem Identifikationsausweis (300) ansprechend auf die Authentifizierung der Person (501), wobei der Identifikationsausweis (300) den kryptographischen Schlüssel nach der Authentifizierung der Person erzeugt.

2. Verfahren (100) nach Anspruch 1, wobei das vorgespeicherte Personendatum in der Datenverarbeitungsanlage (401) vorgespeichert ist.

3. Verfahren (100) nach Anspruch 1 oder 2, wobei das Verfahren (100) ein Übermitteln einer vorgespeicherten Kommunikationsadresse der Person (501) an den elektronischen Zertifizierungsserver (200) durch die Datenverarbeitungsanlage (401) umfasst, und wobei das Übermitteln des kryptographischen Geheimnisses von dem elektronischen Zertifizierungsserver (200) an die Person (501) unter Verwendung der Kommunikationsadresse der Person (501) durchgeführt wird.

4. Verfahren (100) nach einem der vorstehenden Ansprüche, wobei das kryptographische Geheimnis eine alphanummerische Zeichenfolge oder ein kryptographischer Geheimnisschlüssel ist.

5. Verfahren (100) nach einem der vorstehenden Ansprüche, mit:
Übermitteln einer vorgespeicherten Identifikationskennung des Identifikationsausweises (300) an den elektronischen Zertifizierungsserver (200) durch die Datenverarbeitungsanlage (401); und
Authentifizieren des Identifikationsausweises (300) gegenüber dem elektronischen Zertifizierungsserver (200) auf der Basis der übermittelten Identifikationskennung des Identifikationsausweises (300).

6. Verfahren (100) nach Anspruch 5, wobei das Erzeugen (107) des kryptographischen Zertifikats durch den elektronischen Zertifizierungsserver (200) ferner auf der Basis der übermittelten Identifikationskennung des Identifikationsausweises (300) durchgeführt wird.

7. Verfahren (100) nach Anspruch 5 oder 6, wobei die vorgespeicherte Identifikationskennung des Identifikationsausweises (300) in der Datenverarbeitungsanlage (401) vorgespeichert ist.

8. Verfahren (100) nach einem der vorstehenden Ansprüche, wobei der Identifikationsausweis (300) eine Herstellerkennung eines Herstellers (503) des Identifikationsausweises (300) umfasst, und wobei das Verfahren (100) ferner ein Authentifizieren des Identifikationsausweises (300) gegenüber dem elektronischen Zertifizierungsserver (200) auf der Basis der Herstellerkennung umfasst.

9. Verfahren (100) nach einem der vorstehenden Ansprüche, wobei der Identifikationsausweis (300) ein Betriebsausweis ist.

10. Elektronischer Zertifizierungsserver (200) zum Versehen eines mit einem optischen Merkmal einer Person (501) versehenen Identifikationsausweises (300) der Person (501) mit einem kryptographischen Zertifikat, mit:
einer Kommunikationsschnittstelle (201), welche ausgebildet ist, ein vorgespeichertes Personendatum über ein Kommunikationsnetzwerk (403) zu empfangen, einen kryptographischen Schlüssel von dem Identifikationsausweis (300) über das Kommunikationsnetzwerk (403) zu empfangen, und das kryptographische Zertifikat an den Identifikationsausweis (300) über das Kommunikationsnetzwerk (403) zu übermitteln, um den Identifikationsausweis (300) mit dem kryptographischen Zertifikat zu versehen; und
einem Prozessor (203), welcher ausgebildet ist, das kryptographische Zertifikat auf der Basis des kryptographischen Schlüssels und des Personendatums zu erzeugen, wobei der Prozessor (203) ferner ausgebildet ist, ein kryptographisches Geheimnis zu erzeugen, wobei das kryptographische Geheimnis dem Personendatum zugeordnet ist, und wobei die Kommunikationsschnittstelle (201) ferner ausgebildet ist, das kryptographische Geheimnis an die Person (501) über das Kommunikationsnetzwerk (403) zu übermitteln, die Person (501) auf der Basis des übermittelten kryptographischen Geheimnisses über das Kommunikationsnetzwerk (403) zu authentifizieren, und eine Kommunikationsverbindung zu dem Identifikationsausweis (300) über das Kommunikationsnetzwerk (403) ansprechend auf die Authentifizierung der Person (501) aufzubauen, wobei der Prozessor (203) ausgebildet ist, das kryptographische Zertifikat nach der Authentifizierung der Person zu erzeugen.

11. Elektronischer Zertifizierungsserver (200) nach Anspruch 10, wobei die Kommunikationsschnittstelle (201) ferner ausgebildet ist, eine vorgespeicherte Identifikationskennung des Identifikationsausweises (300) über das Kommunikationsnetzwerk (403) zu empfangen, und den Identifikationsausweis (300) auf der Basis der übermittelten Identifikationskennung des Identifikationsausweises (300) über das Kommunikationsnetzwerk (403) zu authentifizieren.

12. Betriebsausweis (300), der mit einem optischen Merkmal einer Person (501) versehen ist, wobei der Betriebsausweis (300) Folgendes umfasst:
einen Prozessor (301), welcher ausgebildet ist, einen kryptographischen Schlüssel zu erzeugen;
eine Kommunikationsschnittstelle (303), welche ausgebildet ist, den erzeugten kryptographischen Schlüssel an einen elektronischen Zertifizierungsserver (200) über ein Kommunikationsnetzwerk (403) zu übermitteln, und ein kryptographisches Zertifikat von dem elektronischen Zertifizierungsserver (200) über das Kommunikationsnetzwerk (403) zu empfangen; und
einen Speicher (305), welcher ausgebildet ist, das kryptographische Zertifikat zu speichern, wobei der Prozessor (301) ausgebildet ist, den kryptographischen Schlüssel nach der Authentifizierung der Person zu erzeugen.

## Claims

1. Method (100) for providing an identification card (300) of a person (501) with a cryptographic certificate, the identification card (300) having an optical feature of the person (501), comprising:
Transmitting (101) a prestored personal datum to an electronic certification server (200) by a data processing system (401);
Generating (103) a cryptographic key by the identification card (300);
Transmitting (105) the generated cryptographic key from the identification card (300) to the electronic certification server (200);
Generating (107) the cryptographic certificate by the electronic certification server (200) on the basis of the cryptographic key and the personal datum; and
Transmitting (109) the cryptographic certificate by the electronic certification server (200) to the identification card (300) in order to provide the identification card (300) with the cryptographic certificate,
Generating a cryptographic secret by the electronic certification server (200), the cryptographic secret being associated with the personal datum;
Transmitting the cryptographic secret from the electronic certification server (200) to the person (501);
Authenticating the person (501) vis-à-vis the electronic certification server (200) on the basis of the transmitted cryptographic secret; and
Establishing a communication link between the electronic certification server (200) and the identification card (300) in response to the authentication of the person (501), wherein the identification card (300) generates the cryptographic key after the authentication of the person (501).

2. Method (100) according to claim 1, wherein the prestored personal datum is prestored in the data processing system (401).

3. Method (100) according to claim 1 or 2, wherein the method (100) comprises transmitting a prestored communication address of the person (501) to the electronic certification server (200) by the data processing system (401), and wherein transmitting the cryptographic secret from the electronic certification server (200) to the person (501) is performed using the communication address of the person (501).

4. Method (100) according to one of the preceding claims, wherein the cryptographic secret is an alphanumeric string or a cryptographic secret key.

5. Method (100) according to one of the preceding claims, comprising:
Transmitting a prestored identification identifier of the identification card (300) to the electronic certification server (200) by the data processing system (401); and
Authenticating the identification card (300) vis-à-vis the electronic certification server (200) on the basis of the transmitted identification identifier of the identification card (300).

6. Method (100) according to claim 5, wherein generating (107) the cryptographic certificate by the electronic certification server (200) is also performed on the basis of the transmitted identification identifier of the identification card (300).

7. Method (100) according to claim 5 or 6, wherein the prestored identification identifier of the identification card (300) is prestored in the data processing system (401).

8. Method (100) according to one of the preceding claims, wherein the identification card (300) comprises a manufacturer identification of a manufacturer (503) of the identification card (300), and wherein the method (100) further comprises authenticating the identification card (300) vis-à-vis the electronic certification server (200) on the basis of the manufacturer identification.

9. Method (100) according to one of the preceding claims, wherein the identification card (300) is a company identification card.

10. Electronic certification server (200) for providing an identification card (300) of a person (501) with a cryptographic certificate, the identification card (300) having an optical feature of the person (501), comprising:
a communication interface (201) which is designed to receive a prestored personal datum via a communication network (403), to receive a cryptographic key from the identification card (300) via the communication network (403), and to transmit the cryptographic certificate to the identification card (300) via the communication network (403) in order to provide the identification card (300) with the cryptographic certificate; and
a processor (203) which is designed to generate the cryptographic certificate on the basis of the cryptographic key and the personal datum, wherein the processor (203) is further designed to generate a cryptographic secret, wherein the cryptographic secret is associated with the personal datum, and wherein the communication interface (201) is further designed to transmit the cryptographic secret to the person (501) via the communication network (403), to authenticate the person (501) on the basis of the transmitted cryptographic secret via the communication network (403), and to establish a communication link to the identification card (300) via the communication network (403) in response to the authentication of the person (501), wherein the processor (203) is designed to generate the cryptographic key after the authentication of the person (501).

11. Electronic certification server (200) according to claim 10, wherein the communication interface (201) is further designed to receive a prestored identification identifier of the identification card (300) via the communication network (403), and to authenticate the identification card (300) on the basis of the transmitted identification identifier of the identification card (300) via the communication network (403).

12. Company identification card (300) having an optical feature of a person (501), wherein the company identification card (300) comprises:
a processor (301) which is configured to generate a cryptographic key;
a communication interface (303) which is designed to transmit the generated cryptographic key to an electronic certification server (200) via a communication network (403), and to receive a cryptographic certificate from the electronic certification server (200) via the communication network (403); and
a memory (305) which is designed to store the cryptographic certificate, wherein the processor (301) is designed to generate the cryptographic key after the authentication of the person (501).

## Revendications

1. Procédé (100) pour munir d'un certificat cryptographique une pièce d'identité (300) d'une personne (501) pourvue d'une caractéristique optique de la personne (501), comprenant :
la communication (101) d'une référence personnelle préenregistrée à un serveur de certification électronique (200) par un équipement de traitement de données (401) ;
la génération (103) d'une clé cryptographique par la pièce d'identité (300) ;
la communication (105) de la clé cryptographique générée par la pièce d'identité (300) au serveur de certification électronique (200) ;
la génération (107) du certificat cryptographique par le serveur de certification électronique (200) sur la base de la clé cryptographique et de la référence personnelle ; et
la communication (109) du certificat cryptographique par le serveur de certification électronique (200) à la pièce d'identité (300) afin de munir la pièce d'identité (300) du certificat cryptographique,
la génération d'un secret cryptographique par le serveur de certification électronique (200), le secret cryptographique étant associé à la référence personnelle ;
la communication du secret cryptographique du serveur de certification électronique (200) à la personne (501) ;
l'authentification de la personne (501) à l'égard du serveur de certification électronique (200) en s'appuyant sur le secret cryptographique communiqué ; et
l'établissement d'une liaison de communication entre le serveur de certification électronique (200) et la pièce d'identité (300) en réaction à l'authentification de la personne (501), la pièce d'identité (300) générant la clé cryptographique après l'authentification de la personne.

2. Procédé (100) selon la revendication 1, la référence personnelle préenregistrée étant préenregistrée dans l'équipement de traitement de données (401).

3. Procédé (100) selon la revendication 1 ou 2, le procédé (100) comprenant une communication d'une adresse de communication préenregistrée de la personne (501) au serveur de certification électronique (200) par l'équipement de traitement de données (401), et la communication du secret cryptographique par le serveur de certification électronique (200) à la personne (501) étant effectuée en utilisant l'adresse de communication de la personne (501).

4. Procédé (100) selon l'une des revendications précédentes, le secret cryptographique étant une séquence de caractères alphanumériques ou une clé de secret cryptographique.

5. Procédé (100) selon l'une des revendications précédentes, comprenant :
la communication d'un identificateur d'identité préenregistré de la pièce d'identité (300) au serveur de certification électronique (200) par l'équipement de traitement de données (401) ; et
l'authentification de la pièce d'identité (300) à l'égard du serveur de certification électronique (200) en s'appuyant sur l'identificateur d'identité communiqué de la pièce d'identité (300).

6. Procédé (100) selon la revendication 5, la génération (107) du certificat cryptographique par le serveur de certification électronique (200) étant en plus effectuée en s'appuyant sur l'identificateur d'identité communiqué de la pièce d'identité (300).

7. Procédé (100) selon la revendication 5 ou 6, l'identificateur d'identité préenregistré de la pièce d'identité (300) étant préenregistré dans l'équipement de traitement de données (401).

8. Procédé (100) selon l'une des revendications précédentes, la pièce d'identité (300) comprenant un identificateur de fabricant d'un fabricant (503) de la pièce d'identité (300), et le procédé (100) comprenant en outre une authentification de la pièce d'identité (300) à l'égard du serveur de certification électronique (200) en s'appuyant sur l'identificateur de fabricant.

9. Procédé (100) selon l'une des revendications précédentes, la pièce d'identité (300) étant un laissez-passer professionnel.

10. Serveur de certification électronique (200) destiné à munir d'un certificat cryptographique une pièce d'identité (300) d'une personne (501) pourvue d'une caractéristique optique de la personne (501), comprenant :
une interface de communication (201), laquelle est configurée pour recevoir une référence personnelle préenregistrée par le biais d'un réseau de communication (403), recevoir une clé cryptographique de la part de la pièce d'identité (300) par le biais du réseau de communication (403) et communiquer le certificat cryptographique à la pièce d'identité (300) par le biais du réseau de communication (403) afin de munir la pièce d'identité (300) du certificat cryptographique ; et
un processeur (203), lequel est configuré pour générer le certificat cryptographique sur la base de la clé cryptographique et de la référence personnelle, le processeur (203) étant en outre configuré pour générer un secret cryptographique, le secret cryptographique étant associé à la référence personnelle, et l'interface de communication (201) étant en outre configurée pour communiquer le secret cryptographique à la personne (501) par le biais du réseau de communication (403), pour authentifier la personne (501) en s'appuyant sur le secret cryptographique communiqué par le biais du réseau de communication (403) et pour établir une liaison de communication avec la pièce d'identité (300) par le biais du réseau de communication (403) en réaction à l'authentification de la personne (501), le processeur (203) étant configuré pour générer le certificat cryptographique après l'authentification de la personne.

11. Serveur de certification électronique (200) selon la revendication 10, l'interface de communication (201) étant en outre configurée pour recevoir un identificateur d'identité préenregistré de la pièce d'identité (300) par le biais du réseau de communication (403) et pour authentifier la pièce d'identité (300) en s'appuyant sur l'identificateur d'identité communiqué de la pièce d'identité (300) par le biais du réseau de communication (403) .

12. Laissez-passer professionnel (300), qui est pourvu d'une caractéristique optique d'une personne (501), le laissez-passer professionnel (300) comprenant les éléments suivants :
un processeur (301) qui est configuré pour générer une clé cryptographique ;
une interface de communication (303), laquelle est configurée pour communiquer la clé cryptographique générée à un serveur de certification électronique (200) par le biais d'un réseau de communication (403) et pour recevoir un certificat cryptographique de la part du serveur de certification électronique (200) par le biais d'un réseau de communication (403) ; et
une mémoire (305), laquelle est configurée pour mémoriser le certificat cryptographique, le processeur (301) étant configuré pour générer la clé cryptographique après l'authentification de la personne.
